# EUROPEAN PATENT APPLICATION

(11) **EP 1 494 102 A1**
(43) Date of publication of application: **05.01.2005**
(21) Application number: 03015085.8
(22) Date of filing: 03.07.2003
(51) Int. Cl.: G06F 1/00

(54) **A method of allowing printing from a network attached device**

(71) Applicant: EuroForm A/S, DK-2765 Smoerum (DK)
(72) Inventor: Niebling, Kim, DK-2765 Smoerum (DK); Olsen, Theis, DK-2770 Kastrup (DK); Sonqvist, Rickie Skov, DK-2740 Skovlunde (DK); Lund, Kenneth Allan, DK-2500 Valby (DK)
(74) Representative: Nielsen, Henrik Sten

(57) **Abstract**

A method of allowing operation of a network attached device. The method comprises downloading a software application including an application manager from a server connected to the network, and installing the software application on the network attached device. In a first alternative, executing at least one device operation by means of the software application, or in a second alternative not allowing execution of any device operations, and requesting license information by sending a request from the network attached device to the server, the request including device specific information. The method further comprises sending licence information including license status from the server to the device, and inputting the licence information to the device. According to the method, the application manager forwards the licence status to the software application, the software application being enabling in the first alternative provided the software application has not been executed or the software application has been licensed, alternatively the software application being non-enabling provided the software application has not being licensed or in the first alternative provided the software application has executed the at least one device operation, and provided the software application being enabling, allowing the device operations or alternatively, provided the software application being non-enabling blocking the device operation or operations.

## Description

### Background of the Invention

### Field of the Invention

The invention relates to a method of automated registering and activating of licensed software products running on virtual machines such as a Java Virtual Machine (JVM) in embedded systems connected to a network such as a local area network (LAN) or a wide area network (WAN) ensuring legal use of the product.

### Description of related technology

The state of the art provides several techniques for obtaining a license key for any licensed software product. Thus the state of the art provides various systems and methods of registration and activation of licensed software products, however, the state of the art fails to provide a method and system for automated registration and activation of licensed software applications in network attached embedded systems.

Previously the preferred way distributing license keys for licensed software products was by using dedicated hardware devices many times referred to as Dongles. This was very costly and it required that a hardware device were shipped to each and every user.

Colosso, in U.S. Pat. No. 6,169,976, describes a method and apparatus for regulating the use of licensed products. This method requires that the user connects to a database on a server and requests the licensed product to be activated. In response, the server generates a license key. The user then installs the licensed product and provides the license key information during the installation process.

Griswold, in U.S. Pat. No. 5,940,504, describes a license management system and method for recording the use of a licensed product, and for controlling its use in accordance with the terms of license. The described system and method includes a license check monitor in the licensed product that checks the licensed product's license status with the license control system at regular time intervals thus requiring that the licensed product has access to the license control system at all times. Furthermore, it assumes that the licensed product is implemented on a network node attached to a communication network that includes the licensor, which limit the use of the invention to intranets.

Lau, in U.S. Pub. No. US 2002/0091943 A1, describes a method and system for encouraging users of computer readable content to register. This method involves embedding of instruction codes in the software products operable to direct the processor circuit to automatically establish a connection to a server for registration. This method is not relevant for embedded systems with proprietary operating systems.

Franklin et al., in International Pub. No. WO 01/50319 A2, describes a system and a method for providing a license management system wherein customers utilize computers to connect to a license management system via a communication line. The license management system can be used with varying types of content and allows the owner of the content to have full control of access to the content.

All of the above mentioned publications are hereby incorporated in the present specification by reference.

### Summary of the Invention

An object of the present invention is to provide a system and method enabling fully automated registration of licensed software in network attached embedded systems such as printers, multi-function devices and facsimile devices. The software application (SA) can be distributed freely, but when installed in the embedded system certain restrictions in the use of the software will apply. At start-up the SA will contact the application manager (AM) also running in the embedded system with registration information such as SA name and version. If the SA is licensed the AM replies that the SA is licensed and the SA will run without any restrictions. On the other hand if the SA is not licensed the AM will contact a web server over a private or public network with the SA information and some device specific information. A webservice running on the web server will validate the registration information against the license database and if a license has been purchased the webservice will reply with a license key for that particular SA in the specific embedded system. The AM then hold the license keys for the different SAs locally in the embedded system.

A further object of the invention is to provide a system and method for automatic update service for a SA installed on network attached embedded system. The AM can optionally be configured to check with the webservice if any code updates are available for the SA in question at start-up, and then either download and install these updates automatically or just notify a system administrator about the availability.

A particular advantage of the present invention is the provision in system and method of using a public network such as the Internet as the communication network allowing the AM in the network attached embedded system to communication with the webservice running on a public accessible web server through firewalls thus eliminating any need for altering an existing infrastructure.

A further advantage of the present invention is the provision in system and method of automatically retrieving the license key by the AM running in the network attached embedded system especially in environments with several hundred devices.

A particular feature of the present invention is the provision in system and method of allowing free trial or demo versions of the SA in the network attached embedded system allowing the user to install and use the software application for a limited time period or number of executions or with a limited feature set alternatively any combination hereof.

The above object, advantage and feature together with numerous other objects, advantages and features which will become evident from the below detailed description of a preferred embodiment of the present invention is according to a first aspect of the present invention obtained by an automated licensing system for ensuring automatic registration and activation of software applications in network attached embedded systems, and said automated licensing system comprising:
(a) a software application or a first plurality of software applications running in a network attached embedded system enhancing existing features or adding new features to the device
(b) an application manager also running in the embedded system controlling the license rights of the installed software applications and proving automatic registration and activation of the individual software applications
(c) a communication protocol between the software applications and the application manager
(d) a private or a public communication network
(e) a webservice running on a web server connected to the communication network
(f) a communication protocol between the application manager and the webservice
(g) a license data base containing information on all the details on sold software applications

In the present context a network attached device is to be considered a device including an embedded processor, such as a printer, a combined printer and scanner, a fax machine, a Personal Digital Assistant (PDA) or other mobile units, but not including network attached personal computers or the like.

According to a second aspect of the present invention a method of allowing operation of a network attached device the method comprising the steps of:
(i) downloading a software application including an application manager from a server connected to the network,
(ii) installing the software application on the network attached device,
(iii) in a first alternative executing at least one device operation by means of the software application for allowing a user to evaluate the software application prior to licensing the software application, or in a second alternative not allowing execution of any device operations,
(iv) requesting license information by sending a request from the network attached device to the server, the request including device specific information,
(v) sending licence information including license status from the server to the network attached device,
(vi) inputting the licence information including the license status to the network attached device,
(vii) the application manager forwarding the licence status to the software application, the software application being enabling in the first alternative provided the software application has not been executed or the software application has been licensed, alternatively the software application being non-enabling provided the software application has not being licensed or in the first alternative provided the software application has executed the at least one device operation, and
(ix) provided the software application being enabling, allowing the device operations or alternatively, provided the software application being non-enabling blocking the device operation or operations.

The method may further comprise the software application automatically sending a request to the server including a request for updating the software application. The server does not need to be identical to the server comprising the license information.

The method may further comprise automatically updating the licence status and/or counting the number of executions performed by said software application. The counting may be performed by any of the components in the software, such as the software application or the application manager, alternatively by a third component.

The counting may result in the software application or license status being non-enabled by exceeding an upper threshold of the number of executions allowed, e.g. the software application may be distributed with a limitation of 10 trial executions.

The software application or license status may be non-enabled by exceeding a time limitation, e.g. the software application may be distributes with a 30 day trail period limitation.

Further alternatively the license status or software application may be permanently enabled however blocking certain features of said software application alternatively this may be combined with any one or more of the above mentioned limitation options.

According to a third aspect of the present invention the step (i) is substituted by the step of copying the software application including the application manager from a data-carrying medium, such as an optical compact disk. This operation may be performed from a local area network server or any other network attached computer.

According to a fourth aspect of the present invention the step (i) is initiated by a user request sent from a computer attached to the network to the server, the software application being downloaded to the computer and installed in the network attached device, alternatively the software application being downloaded directly to and installed into said network attached device.

The network mentioned in all of the above mentioned aspects, objects, advantages and features of the present invention may be a local area network, the local area network being attached to a public network, such as the Internet, the local area network may include a firewall. The connection from the network attached device to the network may be constituted by means of wireless connection, two-wire, twisted-pair, optical fibres, or any other means.

The method according to the second aspect of the present invention may include any of the objects, advantages and features of the first aspect of the present invention or combinations hereof, also the system according to the first aspect of the present invention may include any of the objects, advantages and features of the second aspect of the present invention or combinations hereof.

### Brief description of the drawings

Figure **1** shows a schematic overview of the automated license system.

Figure **2** shows a principal flow diagram of the Client (Embedded) System, a sub element in the automated license system.

Figure **3** shows a principal flow diagram of the Server System, a sub element in the automated license system.

Figure **4** shows a representative diagram of the data packages exchanged in Client (Embedded) System between the Solution **10** and Client Service **11**.

Figure **5** shows a representative diagram of the data packages exchanged in Communication Network between Client Service **11** and Server Service **17.**

### Detailed description of the present Invention

In the following the automated licensing system according to the preferred embodiment of the present invention will be described in detail with reference to the figures listed below.

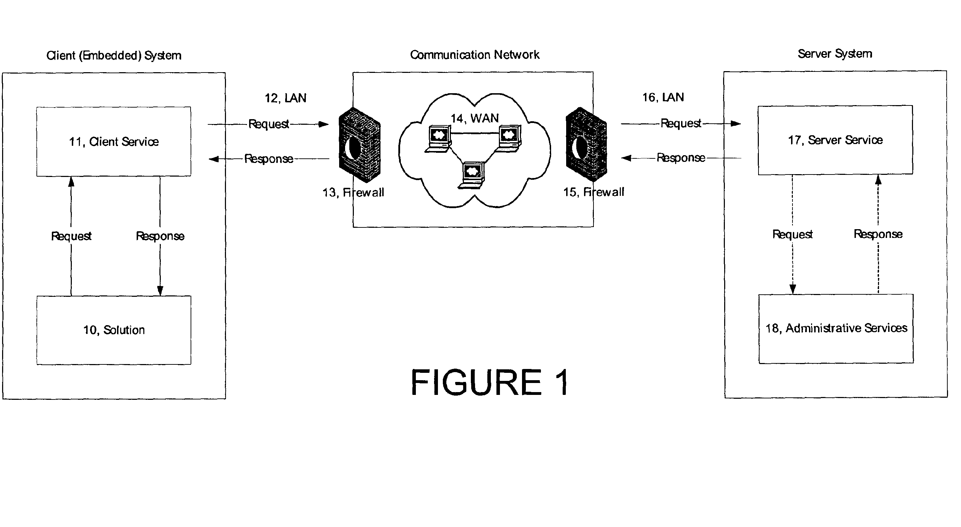

Figure 1 shows a schematic overview of the automated license system designated by numerals 10 in its entirety. A Client Service **11** can communicate over a Communication Network **14** to the Server Service **17** requesting licensing information for a given Solution **10** installed on Client (Embedded) System. The Communication Network can consists of several LAN's **12** + **16** and WAN **14** with attached firewalls **13** + **15** but the communication is carried on by standardized protocols that are capable of bypassing firewalls **13**-**15** etc. and without causing a security treat to existing systems and technology.

A Solution 10 provides some kind of functionality to the Client (Embedded) System but without proper license information the functionality set is limited. To receive license information it communicates internally within the Client (Embedded) System where the Client Service **11** is also present. If the Client Service **11** does not hold previous received license information for the Solution **10** it performs a communication process with the Server Service **17** exchanging specific information about the Solution **10** and the Client (Embedded) System. The Server Service **17** validates received information, possibly in cooperation with other Administrative Services **18** such as order and billing systems, and responds with license information to the Client Service **11**. The Client Service **11** has the option to store the license information, which will avoid the need for further communication with the Server Service **18**, referred to as a static licensing. Dynamic licensing is also an option where every request from Solution **10** is validated by communicating with the Server Service **18**. Static licensing enables continuous use of network-disconnected embedded systems which already have receive license information.

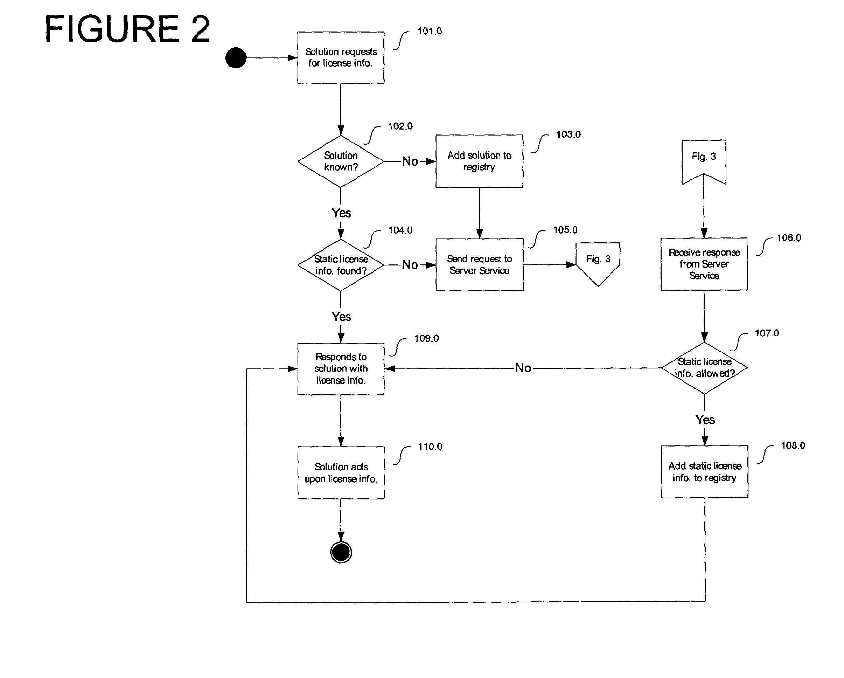

Figure 2 shows a principal flow diagram of the Client (Embedded) System designated by numerals 101.0 in its entirety and describing the process pattern in steps **101.0 -110.0** in which the Solution **10** communicates with the Client Service **11**. The specific data packages (license info.) transmitted in requests and responses will be described later.

Initially both the Solution **10** and the Client Service **11** is installed on the Client (Embedded) System. At certain intervals or by condition changes in Client (Embedded) System the Solution **10** will send a request **101.0** for license information to the Client Service **11**. Condition changes can be hardware conditioned such as a reboot or reconfiguration of the Client (Embedded) System or simply invoked by the Client Service **11** or other occurring events.

When the Client Service **11** receives the request **101.0** for license information it first check its own registry **102.0** to see if the Solution **10** is known. If the Solution **10** is already known the Client Service **11** checks for license information and if static licensing is allowed **104.0.** If so the Client Service **11** responds **109.0** to Solution **10** with license information. If the Solution **10** is not found in the registry the Client Service **11** adds **103.0** the Solution **10**.

If Solution **10** was not found or static licensing was not allowed the Client Service **11** will initiate a communication process with the Server Service **17** on Server System by sending a request **105.0**. Dependent of selected network protocol for communication, bandwidth of physical network, amount of network hardware points to pass, the response time from Server Service **17** can varies. When the Client Service **11** receives the response **106.0** from the Server Service **17** it adds **108.0** the license info. to its registry if static licensing is allowed **107.0**. Finally the Client Service **11** responds to the Solution **10** with license information and the Solution can now take action upon the received license info.

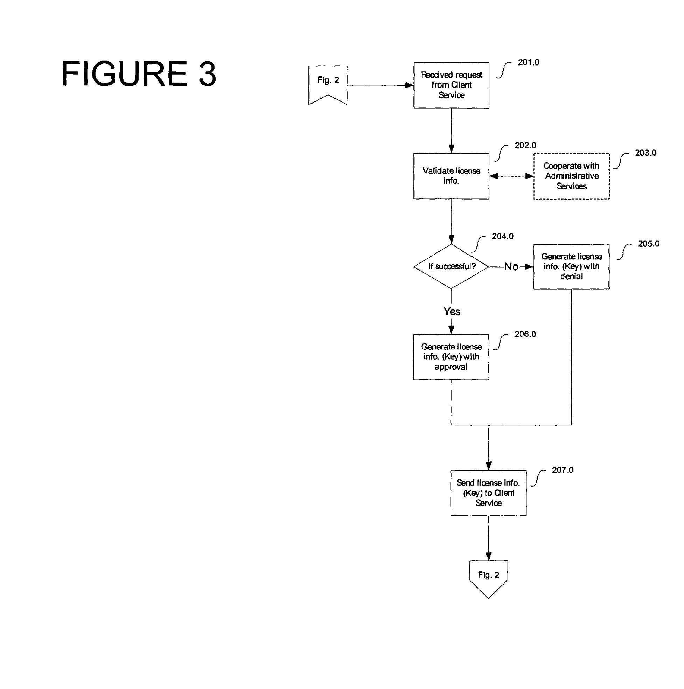

Figure 3 shows a principal flow diagram of the Server System designated by numerals 201.0 in its entirety and describing the process pattern in steps **201.0-207.0.** The specific data packages (license info.) transmitted in requests and responses will be described later.

The Server Service **17** can handles requests **201.0** from multiple Client Services **11**. When a request is received it validates **202.0** the license info. e.g. in cooperation with other Administrative Services such as order and billing systems **203.0**. The result of the validation **204.0** may be either successful, and thereby allowing generation of license info. (Key) with approval **206.0**, or unsuccessful, and thereby declining the approval and generation of license info. (Key) with denial **205.0.** In every circumstance the license info. is send **207.0** back to the Client Service **11** which then uses the license info. to respond to the Solution **10** that originally requested the license info.

In the previous descriptions the license info. was abstract conception of data. The license info. is representative differently when send between Services and Systems.

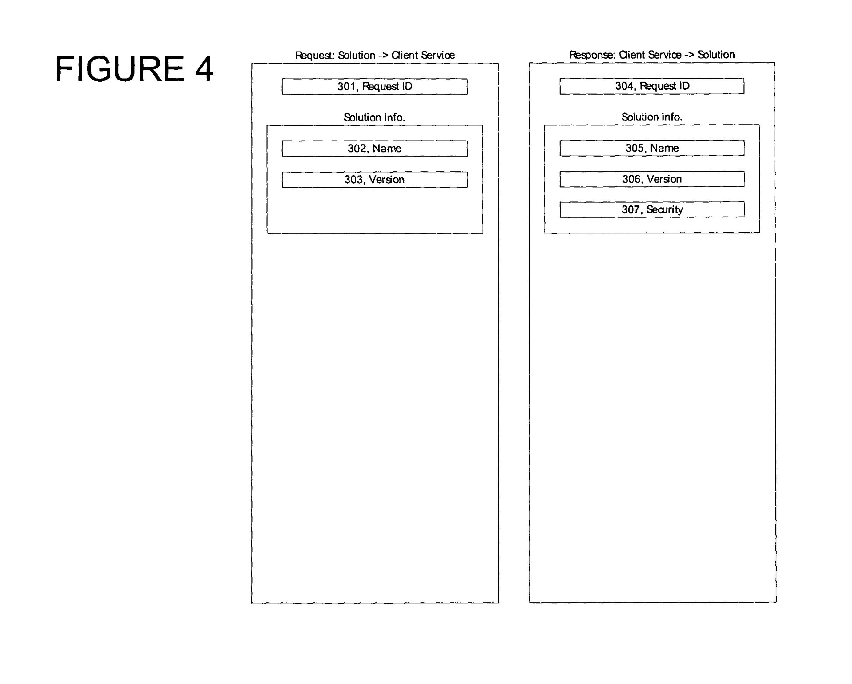

Figure 4 shows a representative diagram of the data packages (license info.) exchanged in Client (Embedded) System between the Solution **10** and Client Service **11**. Representation of data is designated by numerals 301.

First of all data in requests and responses in Client (Embedded) System may be encrypted so malicious attackers will not be able to sniff request or response and make any sense of the data.

When the Solution **10** requests license info. from Client Service **11** it sends a data package containing a unique Request ID **301** and information about the solution, its Name **302** and Version **303.** The Request ID **301** ensures authentication and that requests cannot be replayed by accident or by malicious attackers. The Name **302** and Version **303** are used to identify the Solution **10** for both Client Service **11** and in the possible communication with the Server Service **17**. Version **303** is important because license approval can be dependent of solution version.

When the Client Service **11** receives the request from Solution **10** it first checks its own registry for stored license info. If this is found and static licensing is allowed the Client Service **11** can respond the Solution **10** with a response containing again the Request ID **304,** Name **305** and Version **306** of the Solution **10** which is identical to the request and then a Security **307**. The Security **307** is a solution specific id for license mode that only the Solution **10** understands. A Security **307** with the value "0" could e.g. mean that the solution was denied and the value "1" that it was approved, performing its functionality in Client (Embedded) System. This is part of the architecture of the Solution **10**.

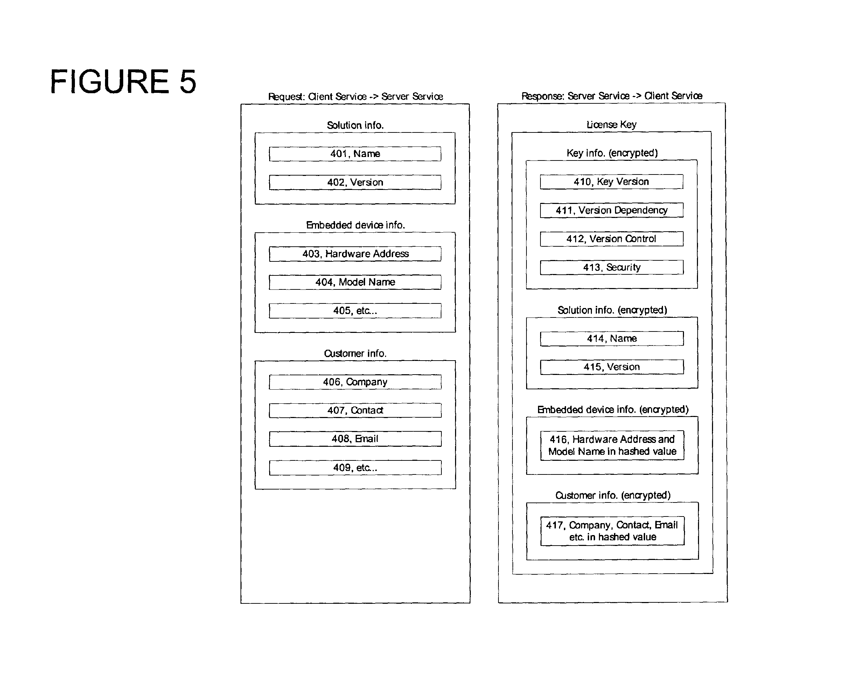

Figure 5 shows a representative diagram of the data packages exchanged in Communication Network between Client Service **11** and Server Service **17**. Representation of data is designated by numerals 401.

If no license info. is found in the Client Service **11** registry or static licensing is not allowed upon a Solution **10** request for license info. the Client Service **11** must initiate communication with the Server Service **17**. The request contains 3 blocks of data, solution info., embedded device info. and customer info. The solution info. is identical to the data in requests and responses between Solution **10** and Client Service **11**, Name **401** and Version **402** for the Solution **10**.

The embedded device info. is specific information about the Client (Embedded) System that uniquely identifies it. The Hardware Address **403** is the physical network address, where Model Name **404** is a name separating different kind of embedded devices used for license differentiation.

The customer info. is specific information about the customer that have bought the Solution **10.** The name of Company **406,** name of Contact **407** and the contacts Email **408** address is required.

Additional information **405, 409** for both embedded device and customer is possible but not used directly for issuing approved license info. in Server Service **17**.

When the Server Service **17** receives the request from Client Service **11** it then starts to validate the license info, e.g. in cooperation with other Administrative Services such as order and billing systems. If required criteria for approval is met the Server Service **17** generates a License Key which is sent back to Client Service **11**. Otherwise an empty License Key will be sent and inform Client Service **11** that license validation was unsuccessful.

A License Key consists of 4 blocks of data. Each block is encrypted. First block is a key info. **409** block that contains of a Key Version **10** so the Client Service **11** will know how to interpret the received License Key. The Version Dependency **411** and Version Control **412** is used in static licensing mode to validate in Client Service **11** if the Solution **10** requesting Version **303** is allowed to use Security **307**. In case a new version of Solution **10** is installed on Client (Embedded) System the license conditions might be that this version is not allowed with earlier used License Key.

The Security **413** is identical to the Client Service **11** response Security **307** to the Solution **10**. The Security **413** is a solution specific id for license mode, which only the Solution **10** understands. A Security **413** with the value "0" could e.g. mean that the solution was denied and the value "1" that it was approved, performing its functionality in Client (Embedded) System. This is part of the architecture of the Solution **10**.

The second block is the solution info. with the Solution **10** Name **414** and the Version **415** which the license is issued for. Third and fourth block is the embedded device info. customer info respectively customer info. **417** in hashed value. They are hashed to compress their size and a hashed value is enough to check if embedded device info. and customer info. is valid.

When the Client Service **11** receives the License Key it stores it in its registry and performs its own validation to ensure that the License Key values of key info., solution info., embedded device info. and customer info. matches the actual values on Client (Embedded) System. Finally it responds with a response to the Solution **10**.

## Claims

1. A method of allowing operation of a network attached device said method comprising the steps of:
(i) downloading a software application including an application manager from a server connected to said network,
(ii) installing said software application on said network attached device,
(iii) in a first alternative executing at least one device operation by means of said software application for allowing a user to evaluate said software application prior to licensing said software application, or in a second alternative not allowing execution of any device operations,
(iv) requesting license information by sending a request from said network attached device to said server, said request including device specific information,
(v) sending licence information including license status from said server to said network attached device,
(vi) inputting said licence information including said license status to said network attached device,
(vii) said application manager forwarding said licence status to said software application, said software application being enabling in said first alternative provided said software application has not been executed or said software application has been licensed, alternatively said software application being non-enabling provided said software application has not being licensed or in said first alternative provided said software application has executed said at least one device operation, and
(ix) provided said software application being enabling, allowing said device operations or alternatively, provided said software application being non-enabling blocking said device operation or operations.

2. The method according to claim 1, wherein said step (vi) further comprises:
automatically updating said licence status and/or counting the number of executions performed by said software application.

3. The method according to claim 2, wherein said license status being non-enabled by exceeding an upper threshold of the number of executions allowed.

4. The method according to claim 1, wherein said license status being non-enabled by exceeding a time limitation.

5. The method according to claim 1, wherein said license status being permanently enabled however blocking certain features of said software application.

6. The method according to claim 1, wherein said step (i) is substituted by the step of copying said software application including said application manager from a data carrying medium, such as a optical compact disk.

7. The method according to claim 1, wherein said step (i) is initiated by a user request sent from a computer attached to said network to said server, said software application being downloaded to said computer and installed in said network attached device, alternatively said software application being downloaded directly to and installed into said network attached device and/or said step (i) is initiated by a request send from said software application to said server, said request further alternatively includes a request for updating said software application.

8. The method according to any of the claims 1 to 8, wherein said network is a local area network, said local area network being attached to a public network, such as the Internet, said local area network including a firewall.

9. The method according to any of the claims 1 to 9, wherein said network attached device is a printer.

10. An automated licensing system for ensuring automatic registration and activation of software applications in network attached embedded systems, said automated licensing system comprising:
a software application or a first plurality of software applications running in a network attached embedded system enhancing existing features or adding new features to said device
an application manager also running in said embedded system controlling said license rights of said installed software applications and proving automatic registration and activation of said individual software applications
a communication protocol between said software applications and said application manager
a private or a public communication network
a webservice running on a web server connected to said communication network
a communication protocol between said application manager and said webservice
a license data base comprising information on all details regarding sold software applications
